# EUROPÄISCHE PATENTSCHRIFT

(11) **EP 3 063 526 B1**
(45) Veröffentlichungstag und Bekanntmachung des Hinweises auf die Patenterteilung: **15.01.2020**
(21) Anmeldenummer: 14824762.0
(22) Anmeldetag: 31.10.2014
(51) Int. Cl.: G01N 11/16

(54) **VORRICHTUNG UND VERFAHREN ZUR BESTIMMUNG DER LONGITUDINALEN VISKOSITÄT EINER FLÜSSIGKEIT**
APPARATUS AND METHOD FOR DETERMINING THE LONGITUDINAL VISCOSITY OF A LIQUID
DISPOSITIF ET PROCÉDÉ POUR DÉTERMINER LA VISCOSITÉ LONGITUDINALE D'UN LIQUIDE

(30) Priorität: 31.10.2013 AT 507182013
(43) Veröffentlichungstag der Anmeldung: 07.09.2016
(73) Patentinhaber: Johannes Kepler Universität Linz, 4040 Linz (AT)
(72) Erfinder: BEIGELBECK, Roman, A-Wien 1220 (AT); ANTLINGER, Hannes, A-4710 Grieskirchen (AT); JAKOBY, Bernhard, A-4040 Linz (AT)
(74) Vertreter: Jell, Friedrich
(86) Internationale Anmeldenummer: PCT/AT2014/050262
(87) Internationale Veröffentlichungsnummer: WO 2015/061825

(56) Entgegenhaltungen:
- WO-A1-95/33981
- US-A- 5 373 745
- US-B2- 8 353 220
- JAKOBY B ET AL: "Miniaturized sensors for the viscosity and density of liquids-performance and issues", IEEE TRANSACTIONS ON ULTRASONICS, FERROELECTRICS AND FREQUENCY CONTROL, IEEE, US, Bd. 57, Nr. 1, 1. Januar 2010 (2010-01-01) , Seiten 111-120, XP011286749, ISSN: 0885-3010, DOI: 10.1109/TUFFC.2010.1386
- MARTIN S J ET AL: "CHARACTERIZATION OF A QUARTZ CRYSTAL MICROBALANCE WITH SIMULTANEOUS MASS AND LIQUID LOADING", ANALYTICAL CHEMISTRY, AMERICAN CHEMICAL SOCIETY, US, Bd. 63, Nr. 20, 15. Oktober 1991 (1991-10-15), Seiten 2272-2281, XP000577312, ISSN: 0003-2700, DOI: 10.1021/AC00020A015

## Beschreibung

### Technisches Gebiet

Die Erfindung betrifft eine Vorrichtung und ein Verfahren zur Bestimmung der longitudinalen Viskosität einer Flüssigkeit.

### Stand der Technik

Verschiedenste Verfahren und Vorrichtungen zur Bestimmung der Viskosität einer Flüssigkeit sind aus dem Stand der Technik bekannt, unter anderem unter Verwendung von Torsionsschwingungen (EP0527176B1).

Außerdem ist ein Coriolis-Durchflussmessgerät aus der US5373745A bekannt.

### Darstellung der Erfindung

Es ist daher die Aufgabe der Erfindung, ein Verfahren zu schaffen, dass eine hohe Genauigkeit in der Messung der Viskosität einer Flüssigkeit erreichen kann.

Die Erfindung löst die gestellte Aufgabe hinsichtlich des Verfahrens durch die Merkmale des Anspruchs 1.

Erfährt die Flüssigkeit in mindestens einer Messkammer mit ausschließlich von parallelen Geraden ausgebildeter Mantelfläche oder ausgebildeten Mantelflächen einer Schwingungsanregung, können inhärent durch die ausschließlich radiale Ausbreitung der Schwingungen in der Flüssigkeit Signalverluste durch Beugungseffekte vermieden werden. Es ist so möglich, dass nachteilige Einflüsse auf die Dämpfung der Schwingungsanregung und damit auf die erfassten Messdaten nicht mehr auftreten können, wodurch die Genauigkeit der Berechnung des Dämpfungskoeffizienten erhöht werden kann. Zudem fallen durch derart geformte Mantelflächen nachteilige Randeffekte weg, weil die Messkammer mantelseitig ausschließlich durch funktionsbestimmende Komponenten begrenzt ist. Außerdem kann mithilfe von radialen Schwingungen vorteilhaft in tieferen Schichten einer Flüssigkeit messtechnisch vorgedrungen werden. Unter Berücksichtigung der anderen Merkmale des Anspruchs 1 kann daher im Gegensatz zum Stand der Technik reproduzierbar ein genaues Verfahren zur Bestimmung der longitudinalen Viskosität gewährleistet werden.

Im Allgemeinen wird Folgendes, gegebenenfalls zur Stützung der Erfindung erwähnt: Aus einem nach veröffentlichten Stand der Technik ist ein piezoelektrischer Rohrresonator bekannt, der radial resonant schwingend mit der Flüssigkeit in Kontakt steht und dessen Impedanz gemessen wird (Autor: Thomas Voglhuber-Brunnmaier et. al., Titel: "Modeling of Piezoelectric Tube Resonators for Liquid Sensing Applications" Information for Paper ID 7785, IEEE Sensors 3. November 2013). Über solche Impedanzmessdaten kann auf die Viskosität der Flüssigkeit rückgeschlossen werden - und zwar indem ein die Dämpfung der Schwingungsanregung des ersten Rohrs durch die Flüssigkeit beschreibender Dämpfungskoeffizient berechnet wird, der verglichen mit einem anderen Dämpfungskoeffizient einer in der Viskosität bekannten Flüssigkeit ein Maß für die Viskosität der gemessenen Flüssigkeit darstellt.

Einfache Handhabungsverhältnisse im Verfahren können sich ergeben, wenn der piezoelektrische Effekt des aus einem piezoelektrischen Material bestehenden ersten Rohrs zur Erzeugung der radialen Schwingungen des ersten Rohrs verwendet wird. Zudem können sich solche d₃₃ piezoelektrische Rohre besonders gut zur Erzeugung von radialen Schwingungen in der Messkammer eignen.

Von einer Resonanzverstärkung kann profitiert werden, wenn von den radialen Schwingungen mindestens eine die Resonanzfrequenz des Rohrs oder eine Frequenz in der Nähe der Resonanzfrequenz des Rohrs aufweist. Damit kann der Rauschabstand der Messdaten erhöht und die Viskosität der Flüssigkeit genauer bestimmt werden.

Wird die Flüssigkeit in eine kreiszylindrische Messkammer eingebracht, deren Mantelfläche vom inneren Rohrmantel des ersten Rohrs ausgebildet wird, kann eine genau definierte Geometrie zur Anregung der damit in Kontakt stehenden Flüssigkeit genützt werden. Die Reproduzierbarkeit des Verfahrens kann sich damit erhöhen.

Die Genauigkeit des Verfahrens kann weiter erhöht werden, wenn das erste Rohr in radiale Schwingungen versetzt wird, die zeitlich nacheinander unterschiedliche Frequenzen in einem vorgegebenen Frequenzbereich aufweisen. Solch eine Analyse im Frequenzbereich kann zudem die Anzahl an vergleichbaren Parametern erhöhen, was in weiterer Folge die Vergleichbarkeit des bestimmten Dämpfungskoeffizienten verbessern kann.

Werden vom ersten Rohr Impedanz-Messdaten aufgenommen, kann sich die Handhabung des Verfahrens weiter vereinfachen, indem das aktive Rohr auch als Sensor verwendet werden kann.

Eine vergleichsweise schnelle und einfache Berechnung des Dämpfungskoeffizienten kann ermöglicht werden, wenn aus den Messdaten ein Interferenzmuster ermittelt wird, über das der Dämpfungskoeffizient berechnet wird.

Insbesondere kann hierbei über mindestens ein Maxima und/oder Minima des Interferenzmusters der Dämpfungskoeffizient berechnet werden, um auch bei Flüssigkeiten mit geringer Viskosität für einen ausreichend hohen Signal-Rauschabstand zu sorgen.

Wird die Flüssigkeit in mindestens eine hohlkreiszylindrische Messkammer eingebracht, deren eine Mantelfläche vom zu radialen Schwingungen anregbaren ersten Rohr ausgebildet wird, kann auch mit einer derartigen Messkammer die Flüssigkeit ausschließlich mit einer radialen Schwingung radial angeregt werden.

Besonders kann sich solch eine Messkammer auszeichnen, wenn das erste Rohr in radiale Schwingungen versetzt wird, die einem Burst-Signal folgen. Hierbei ist von Vorteil, wenn die Frequenz der mehrmals wiederholten Schwingung in der Nähe der Resonanzfrequenz des ersten Rohrs liegt, was aber nicht zwangsweise der Fall sein muss.

Bildet die andere Mantelfläche der hohlkreiszylindrischen Messkammer ein zweites Rohr aus, kann sich dadurch die Möglichkeit eröffnen, auf verfahrenstechnisch einfache Weise, von diesem zweiten Rohr Messdaten zur Schwingungsanregung der Flüssigkeit durch die radialen Schwingungen des ersten Rohrs zu erfassen.

Die Genauigkeit der Brechung des Dämpfungskoeffizienten kann weiter erhöht werden, indem aus einem Vergleich der radialen Schwingungen des ersten Rohrs und den Messdaten ein die Dämpfung der akustischen Welle durch die Flüssigkeit beschreibender Dämpfungskoeffizient D_{K} berechnet wird. Zudem kann das Verfahren beschleunigt werden, wenn der Vergleich im Zeitbereich durchgeführt wird.

Wird die Flüssigkeit in zwei hohlkreiszylindrische Messkammern eingebracht, wobei eine hohlkreiszylindrische Messkammer vom ersten und dem dazu äußeren zweiten Rohr und eine weitere hohlkreiszylindrische Kammer vom ersten und einem dazu inneren dritten Rohr eingebracht, wobei vom zweiten und dritten Rohr Messdaten zur Schwingungsanregung der Flüssigkeit durch die radialen Schwingungen des ersten Rohrs erfasst werden, können Nichtlinearitäten in der Schwingungserzeugung kompensiert werden, die auf das piezoelektrische Material des ersten Rohrs zurückgehen. Zudem können sich damit auch Fehler kompensieren, die durch die unbekannten Materialparameter der piezoelektrischen Wandler auftreten können.

Diese angesprochene Kompensation kann insbesondere erfolgen, indem die Messdaten vom zweiten und dritten Rohr einer Verhältnisbildung unterworfen werden. Damit können beispielsweise die Einflüsse des piezoelektrischen Materials des ersten Rohrs auf die Messergebnisse kompensiert werden, was die Genauigkeit in der Berechnung des Dämpfungskoeffizienten und das Verfahren verbessern kann.

Es ist zudem die Aufgabe der Erfindung, eine aus dem Stand der Technik bekannte Vorrichtung Bestimmung der longitudinalen Viskosität einer Flüssigkeit konstruktiv zu vereinfachen, dennoch aber eine hohe Empfindlichkeit bzw. Auflösung zu garantieren.

Die Erfindung löst die gestellte Aufgabe durch die Vorrichtung mit den Merkmalen des Anspruchs 14.

Insbesondere können Signalverluste durch Beugungseffekte vermieden werden, in dem das d33 piezoelektrische Rohr die gesamte Mantelfläche der Messkammer ausbildet oder oder die d33 piezoelektrischen Rohre jeweils alle Mantelflächen der Messkammern ausbilden. Zudem ist eine derartige Messkammer vergleichsweise konstruktiv einfach herzustellen, was eine kostengünstige Vorrichtung schaffen kann.

Eine einfache Konstruktion kann ermöglicht werden, wenn eine Messkammer kreiszylindrisch ausgebildet ist. Vorstellbar kann auch sein, wenn eine Messkammer hohlkreiszylindrisch ausgebildet ist.

Ist das zur radialen Schwingungen anregbare erste piezoelektrische Rohr zwischen zwei hohlkreiszylindrische Messkammern vorgesehen, können Nichtlinearitäten in der Schwingungserzeugung kompensiert werden. Zudem können sich damit auch Fehler kompensieren, die durch die unbekannten Materialparameter der d33 piezoelektrischen Wandler auftreten können.

### Kurze Beschreibung der Zeichnung

In den Zeichnungen ist beispielsweise das erfindungsgemäße Verfahren anhand mehrerer Ausführungsvarianten näher erläutert. Es zeigen
- Fig. 1: eine Draufsicht auf eine erste Vorrichtung zur Messung der Viskosität einer Flüssigkeit,
- Fig. 2: eine grafische Darstellung von Messdaten der nach Fig. 1 dargestellten Vorrichtung zu unterschiedlich viskosen Flüssigkeiten,
- Fig. 3: eine Draufsicht auf eine zweite Vorrichtung zur Messung der Viskosität einer Flüssigkeit,
- Fig. 4: eine Draufsicht auf eine dritte Vorrichtung zur Messung der Viskosität einer Flüssigkeit und
- Fig. 5: eine grafische Darstellung von Messdaten der nach Fig. 3 und 4 dargestellten Vorrichtung.

### Wege zur Ausführung der Erfindung

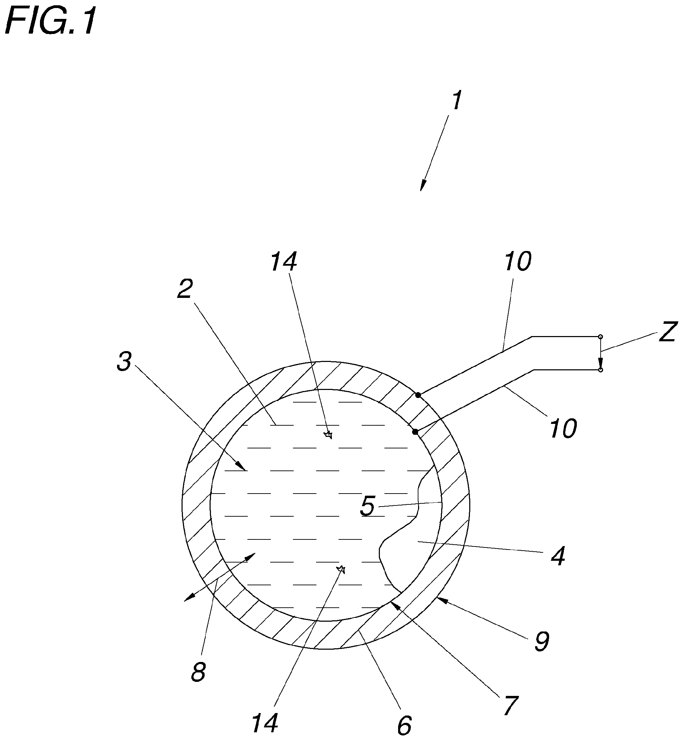

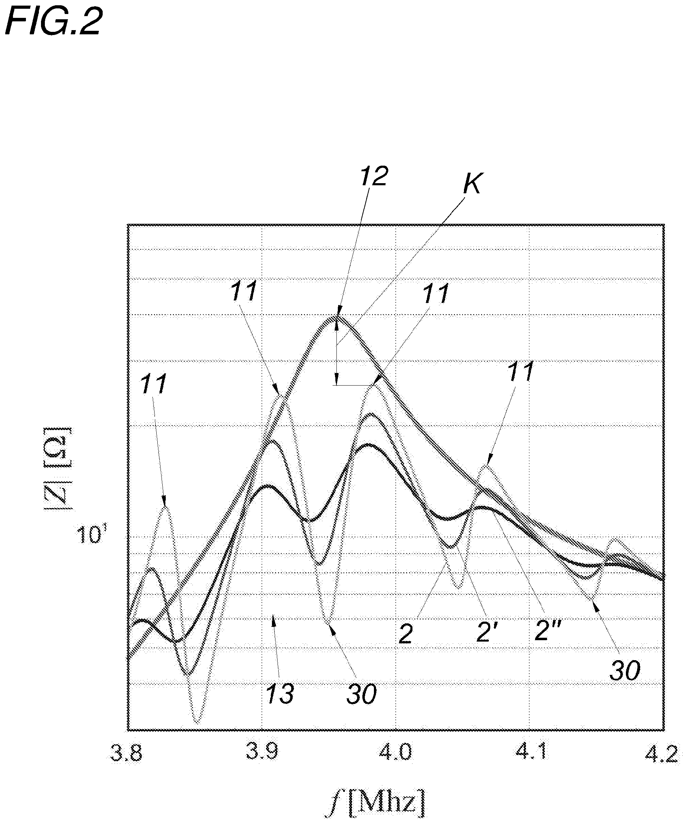

Gemäß Fig. 1 wird beispielsweise eine Vorrichtung 1 dargestellt, die zur Bestimmung der longitudinalen Viskosität eine Flüssigkeit 2 dient. Hierzu bildet die Vorrichtung 1 eine Messkammer 3 aus, deren vom Boden 4 abstehende Mantelfläche 5 von einem ersten Rohr 6 ausgeformt wird - und zwar von seinem inneren Rohrmantel 7. Die Flüssigkeit 2 steht in Kontakt mit dem Rohr 6. Konstruktiv einfach gelöst besteht das Rohr 6 aus einem piezoelektrischen Material mit einem Piezokoeffizienten d₃₃ und kann daher zu einer Dickenschwingung bzw. zu radialen Schwingungen 8 angeregt werden. Zu dieser Anregung ist das Rohr 6 an seinem inneren Rohrmantel 7 und an seinem äußeren Rohrmantel 9 über elektrische Anschlussleitungen 10 kontaktiert. Diese Anschlussleitungen 10 dienen jedoch nicht nur zur Anregung des Rohrs 6, sondern auch zur Messdatenerfassung, die sich infolge der Schwingungsanregung der Flüssigkeit 2 durch die radialen Schwingungen 8 des Rohrs 6 ergeben. Vorteilhaft können Anregung und Erfassung von Messdaten Z(f) mithilfe einer Impedanzmessung durchgeführt werden, beispielsweise unter Verwendung des Impedanzmessgeräts Agilent 4294, dessen Messergebnis beispielsweise der Fig. 2 zu entnehmen ist.

Zur Durchführung des erfindungsgemäßen Verfahrens wird nun das Rohr 6 unter Ausnützung seines piezoelektrischen Effekts in radiale Schwingungen 8 versetzt. Diese Schwingungen 8 sind voneinander in ihrer Frequenz unterschiedlich, wobei eine dieser Schwingungen 8 die Resonanzfrequenz des Rohrs 6 aufweist, um eine Amplitudenverstärkung bei der Messdatenerfassung ausnützen zu können. Dieser Effekt kann aber auch dann genutzt werden, wenn diese Schwingung 8 in der Nähe der Resonanzfrequenz des Rohrs 6 liegen. Die Flüssigkeit 2 schwingt nun mit dem radial schwingenden Rohr 6 mit und dämpft diese radiale Schwingung 8 entsprechend ihrer Viskosität. Über die Erfassung der Messdaten zur Schwingungsanregung der Flüssigkeit 2 durch die radialen Schwingungen 8 des ersten Rohrs 6 wird ein Dämpfungskoeffizient D_{K} berechnet, der die Dämpfung der Schwingungsanregung des Rohrs 5 durch die Flüssigkeit 2 beschreibt. Dieser Dämpfungskoeffizient D_{K} kann beispielsweise, wie in Fig. 2 dargestellt, ein Maß eines gedämpften Maxima 11 einer Flüssigkeit 2 gegenüber der Resonanzamplitude 12 des Rohrs darstellen. Es ist aber auch vorstellbar, hierfür das Interferenzmuster 13 bzw. im Speziellen dessen Maxima 11 und/oder auch Minima 30 zu berücksichtigen bzw. dazu zu verwenden, damit zusätzlich oder alternativ über eine Frequenzbereichsauswertung den Dämpfungskoeffizient D_{K} zu berechnen. In Fig. 2 sind zudem Interferenzmuster 13 von Flüssigkeiten 2, 2', 2" unterschiedlicher Viskosität zu erkennen.

Entscheidend für eine genaue Berechnung des Dämpfungskoeffizienten D_{K} ist jedoch die Vermeidung von Signalverluste an den Messdaten Z(f) durch Beugungseffekte. Zudem können nachteilige Effekte nicht vermieden werden, wenn reflektierte radiale Schwingungen 8 auf Festkörper 14 in der Flüssigkeit 2 treffen. Erfindungsgemäß wird dies von der Vorrichtung und vom Verfahren vermieden, indem die Flüssigkeit 2 in der kreiszylindrischen Messkammer 3 eine Schwingungsanregung mit einer ausschließlich von parallelen Geraden ausgebildeten Mantelfläche 5 erfährt. Diese einzige Mantelfläche 5 wird vom inneren Rohrmantel 7 des Rohrs 6 ausgebildet. Selbst Flüssigkeiten 2 mit einem vergleichsweise hohen Anteil an Festkörpern 14 und/oder mit einem vergleichsweise großen Festkörper 14 verfälschen bzw damit das Verfahren nicht - was in weiterer Folge reproduzierbar äußerst genaue Messergebnisse garantiert.

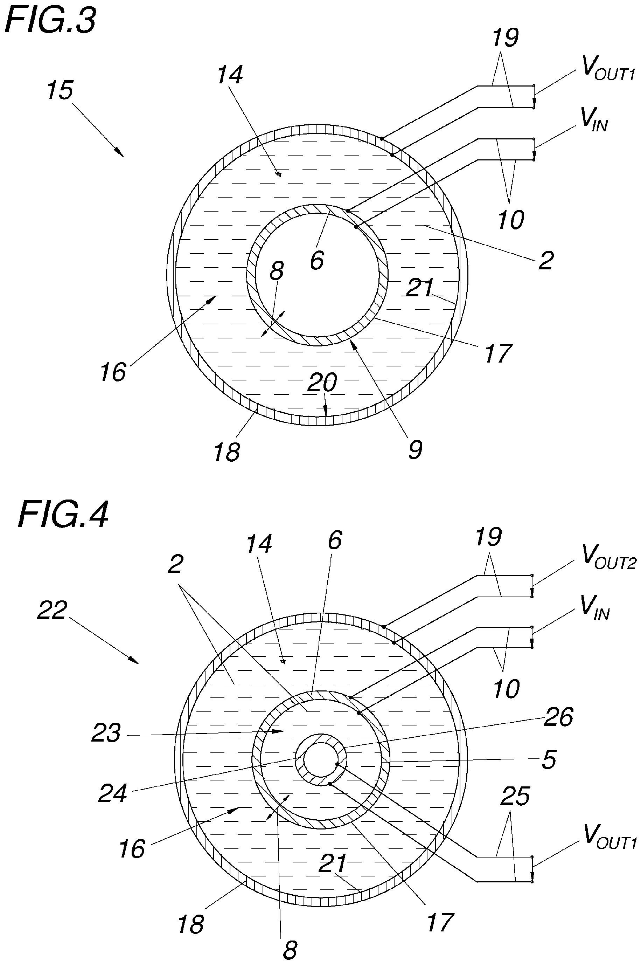

In der nach Fig. 3 dargestellten Vorrichtung 15 ist zum Unterschied zur nach Fig. 1 dargestellten Vorrichtung 1 eine hohlkreiszylindrische Messkammer 16 zu erkennen, die mit Flüssigkeit 2 gefüllt ist. Eine innere Mantelfläche 17 der hohlkreiszylindrischen Messkammer 15 wird vom äußeren Rohrmantel 9 des ersten Rohrs 6 gebildet. Dieses Rohr 6 wird - gleich wie bei Fig. 1 - über elektrische Anschlussleitungen 10 piezoelektrisch in radiale Schwingungen 8 versetzt. Zum Unterschied zur Vorrichtung 1 nach Fig. 1 werden Messdaten V_{OUT1}(t) von einem zweiten mit der Flüssigkeit 2 in Kontakt stehenden Rohr 18 aufgenommen, das ebenso aus einem piezoelektrischen d33 Material besteht und über elektrische Anschlussleitungen 19 mit einem nicht näher dargestellten Messgerät bzw. Voltmeter verbunden ist. Dieses zweite Rohr 18 bildet zudem mit seinem inneren Rohrmantel 20 die zweite Mantelfläche 21 der Messkammer 16 aus, die demnach auch hier ausschließlich von parallelen Geraden ausgebildete Mantelflächen 17, 21 aufweist.

In der nach Fig. 4 dargestellten Vorrichtung 22 nach einem dritten Ausführungsbeispiel sind zwei Messkammern 16, 23 zu erkennen, die mit Flüssigkeit 2 gefüllt sind. Zum Unterschied zur nach Fig. 3 dargestellten Vorrichtung 15 ist hier nämlich ein Drittes, auch aus einem piezoelektrischen d33 Material bestehendes Rohr 24 vorgesehen. Zwischen dem ersten Rohr 6 und dem dritten Rohr 24 entsteht so eine weitere Messkammer 23. Das die beiden Messkammern 16, 23 mantelseitig begrenzende erste Rohr 6 wird zu radialen Schwingungen 8 angeregt, wobei sowohl das zum ersten Rohr 6 äußere zweite Rohr 18 zur Erfassung von Messdaten V_{OUT1}(t) als auch das zum ersten Rohr 6 innere dritte Rohr 24 zur Erfassung von Messdaten V_{OUT2}(t) dienen. Diese Messdaten V_{OUT1}(t), V_{OUT2}(t) werden beispielsweise von nicht näher dargestellten Voltmetern aufgenommen, die an die jeweiligen elektrischen Anschlussleitungen 19, 25 angeschlossen sind. Wie in Fig. 4 zu erkennen, sind den Messkammern 16 bzw. 23 auch ausschließlich von parallelen Geraden ausgebildete Mantelflächen 17, 21 bzw. 5, 26 gemeinsam.

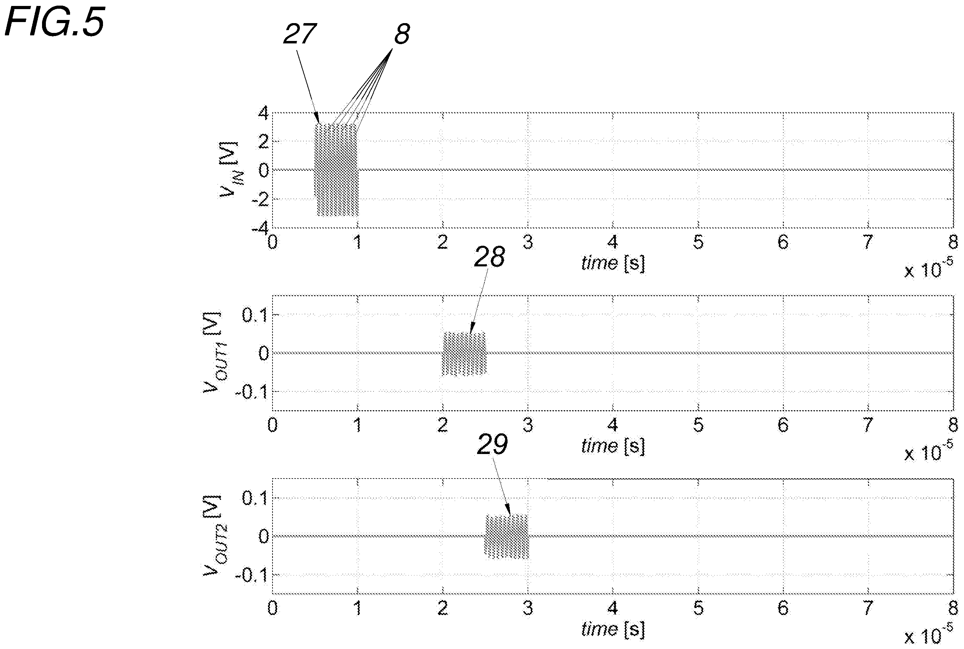

Zur Durchführung des erfindungsgemäßen Verfahrens an den Vorrichtungen 15, 22 wird an das Rohr 6 eine elektrischen Spannung V_{IN}(t) angelegt, wodurch unter Ausnützung seines piezoelektrischen Effekts das erste Rohr 6 in radiale Schwingungen 8 versetzt wird, die einem Burst-Signal 27 folgen. Die Frequenz der elektrischen Spannung V_{IN}(t) liegt hierbei in der Nähe der Resonanzfrequenz des Rohrs 6. Diese radialen Schwingungen 8 übertragen sich auf die Flüssigkeit 2 der jeweiligen Kammern 16, 23 der Vorrichtungen 15, 22 und werden in gedämpfter Eigenschaft vom zweiten Rohr 6 der Vorrichtung 15 bzw. vom zweiten Rohr 6 und dritten Rohr 24 der Vorrichtung 22 messtechnisch erfasst. Nach Fig. 5 sind die diesbezüglichen Messspannungen V_{OUT1}(t) am zweiten Rohr 6 und die V_{OUT2}(t) am dritten Rohr 24 zu erkennen. Über eine Zeitbereichsauswertung des Verlaufs, beispielsweise über einen Vergleich der Amplituden, kann nun eine Kenngröße K für den Dämpfungskoeffizient D_{K} der Flüssigkeit 2 bestimmt werden. Der die Dämpfung der akustischen Welle durch die Flüssigkeit 2 beschreibender Dämpfungskoeffizient D_{K} kann dann als Maß zur Bestimmung der Viskosität der Flüssigkeit verwendet werden.

Gegenüber der Vorrichtung 15 weist die Vorrichtung 22 den Vorteil auf, dass hier Einflüsse des ersten Rohrs 6 auf das Übertragungsverhalten kompensiert werden können, beispielsweise durch eine Verhältnisbildung der Messdaten V_{OUT1}(t) und V_{OUT2}(t).

Selbstverständlich können der Eingangsdaten V_{IN}(t) und den Messdaten V_{OUT1}(t) und V_{OUT2}(t) im Zeitbereich auch diese über die Frequenz V_{IN}(f), V_{OUT1}(f) und V_{OUT2}(f) im Verfahren berücksichtigt oder anstatt diesen verwendet werden.

## Patentansprüche

1. Verfahren zur Bestimmung der longitudinalen Viskosität einer in mindestens einer Messkammer (3, 16, 23) mit mindestens einem Rohr (6, 18, 24) vorgesehenen Flüssigkeit (2), bei dem
das mit der Flüssigkeit (2) in Kontakt stehende erste Rohr (6) unter Ausnützung eines piezoelektrischen Effekts in radiale Schwingungen (8) versetzt wird, wobei der piezoelektrische Effekt des aus einem piezoelektrischen Material bestehenden ersten Rohrs (6) zur Erzeugung der radialen Schwingungen (8) des ersten Rohrs (6) verwendet wird,
Messdaten (Z, V_{OUT1}, V_{OUT2}) zur Schwingungsanregung der Flüssigkeit (2) durch die radialen Schwingungen (8) des ersten Rohrs (2) erfasst werden und
anhand der Messdaten (Z, V_{OUT1}, V_{OUT2}) ein die Dämpfung aufgrund der Flüssigkeit (2) beschreibender Dämpfungskoeffizient (D_{K}) berechnet wird, über den die longitudinale Viskosität der Flüssigkeit (2) bestimmt wird, wobei
die Flüssigkeit (2) in mindestens einer Messkammer (3, 16, 23) mit ausschließlich von parallelen Geraden ausgebildeter Mantelfläche (5) oder ausgebildeten Mantelflächen (5, 17, 21, 26) einer Schwingungsanregung erfährt.

2. Verfahren nach Anspruch 1, **dadurch gekennzeichnet, dass** von den radialen Schwingungen (8) mindestens eine die Resonanzfrequenz des Rohrs (6) oder eine Frequenz in der Nähe der Resonanzfrequenz des Rohrs (6) aufweist.

3. Verfahren nach Anspruch 1 oder 2, **dadurch gekennzeichnet, dass** die Flüssigkeit (2) in eine kreiszylindrische Messkammer (3) eingebracht wird, deren Mantelfläche (5) vom inneren Rohrmantel (7) des ersten Rohrs (6) ausgebildet wird.

4. Verfahren nach Anspruch 3, **dadurch gekennzeichnet, dass** das erste Rohr (6) in radiale Schwingungen (8) versetzt wird, die zeitlich nacheinander unterschiedliche Frequenzen in einem vorgegebenen Frequenzbereich aufweisen.

5. Verfahren nach Anspruch 3 oder 4, **dadurch gekennzeichnet, dass** vom ersten Rohr (6) Impedanz-Messdaten (Z) aufgenommen werden.

6. Verfahren nach Anspruch 3, 4 oder 5, **dadurch gekennzeichnet, dass** aus den Messdaten (Z) ein Interferenzmuster (13) ermittelt wird, über das der Dämpfungskoeffizient (D_{K}) berechnet wird.

7. Verfahren nach Anspruch 6, **dadurch gekennzeichnet, dass** über mindestens ein Maxima (11) und/oder Minima (30) des Interferenzmusters (13) der Dämpfungskoeffizient (D_{K}) berechnet wird.

8. Verfahren nach Anspruch 1 oder 2, **dadurch gekennzeichnet, dass** die Flüssigkeit (2) in mindestens eine hohlkreiszylindrische Messkammer (16, 23) eingebracht wird, deren eine Mantelfläche (5, 17) vom zu radialen Schwingungen (8) anregbaren ersten Rohr (6) ausgebildet wird.

9. Verfahren nach Anspruch 8, **dadurch gekennzeichnet, dass** das erste Rohr (6) in radiale Schwingungen (8) versetzt wird, die einem Burst-Signal (27) folgen.

10. Verfahren nach Anspruch 9, **dadurch gekennzeichnet, dass** die andere Mantelfläche (21) der hohlkreiszylindrischen Messkammer (16) ein zweites Rohr (18) ausbildet, von dem Messdaten (V_{OUT1}) zur Schwingungsanregung der Flüssigkeit (2) durch die radialen Schwingungen (8) des ersten Rohrs (6) erfasst werden.

11. Verfahren nach Anspruch 10, **dadurch gekennzeichnet, dass** aus einem, insbesondere im Zeitbereich durchgeführten, Vergleich der radialen Schwingungen (8) des ersten Rohrs und den Messdaten (V_{OUT1}, V_{OUT2}) ein die Dämpfung der akustischen Welle durch die Flüssigkeit (2) beschreibender Dämpfungskoeffizient (D_{K}) berechnet wird.

12. Verfahren nach Anspruch 10 oder 11, **dadurch gekennzeichnet, dass** die Flüssigkeit (2) in zwei hohlkreiszylindrische Messkammern (16, 23) eingebracht wird, wobei eine hohlkreiszylindrische Messkammer (16) vom ersten und dem dazu äußeren zweiten Rohr (6, 18) und eine weitere hohlkreiszylindrische Kammer (23) vom ersten und einem dazu inneren dritten Rohr (6, 24) eingebracht wird, wobei vom zweiten und dritten Rohr (18, 24) Messdaten (V_{OUT1}, V_{OUT2}) zur Schwingungsanregung der Flüssigkeit (2) durch die radialen Schwingungen (2) des ersten Rohrs (6) erfasst werden.

13. Verfahren nach Anspruch 12, **dadurch gekennzeichnet, dass** die Messdaten (V_{OUT1}, V_{OUT2}) vom zweiten und dritten Rohr (18, 24) einer Verhältnisbildung unterworfen werden.

14. Vorrichtung zur Bestimmung der longitudinalen Viskosität einer Flüssigkeit (2) mit mindestens einer die Flüssigkeit (2) aufnehmenden Messkammer (3, 16, 23) und mit mindestens einem d33 piezoelektrischen Rohr (6, 18, 24), wobei das d33 piezoelektrische Rohr (6) die gesamte Mantelfläche (5) der Messkammer (3) oder die d33 piezoelektrischen Rohre (6, 18, 24) jeweils alle Mantelflächen (5, 17, 21, 26) der Messkammern (16, 23) ausbilden.

15. Vorrichtung nach Anspruch 14, **dadurch gekennzeichnet, dass** eine Messkammer (3) kreiszylindrisch ausgebildet ist.

16. Vorrichtung nach Anspruch 14, **dadurch gekennzeichnet, dass** eine Messkammer (16, 23) hohlkreiszylindrisch ausgebildet ist.

17. Vorrichtung nach Anspruch 16, **dadurch gekennzeichnet, dass** das zur radialen Schwingungen (8) anregbare erste piezoelektrische Rohr (6) zwischen zwei hohlkreiszylindrische Messkammern (16, 23) vorgesehen ist.

## Claims

1. Method for determining the longitudinal viscosity of a liquid (2) provided in at least one measuring chamber (3, 16, 23) having at least one tube (6, 18, 24), in which
the first tube (6), which is in contact with the liquid (2), is set into radial vibrations (8) using a piezoelectric effect, wherein the piezoelectric effect of the first tube (6), which consists of a piezoelectric material, is used to generate the radial vibrations (8) of the first tube (6),
measurement data (Z, V_{OUT1}, V_{OUT2}) for vibration excitation of the liquid (2) by the radial vibrations (8) of the first tube (2) are acquired, and
using the measurement data (Z, V_{OUT1}, V_{OUT2}), a damping coefficient (D_{K}) describing the damping on the basis of the liquid (2) is calculated, via which damping coefficient the longitudinal viscosity of the liquid (2) is determined, wherein
the liquid (2) is subjected to a vibration excitation in at least one measuring chamber (3, 16, 23) having a lateral surface (5) or lateral surfaces (5, 17, 21, 26) formed exclusively from parallel straight lines.

2. Method according to claim 1, **characterized in that** with respect to the radial vibrations (8) at least one thereof has the resonant frequency of the tube (6) or a frequency in the vicinity of the resonant frequency of the tube (6).

3. Method according to claim 1 or 2, **characterized in that** the liquid (2) is introduced into a circular-cylindrical measuring chamber (3), the lateral surface (5) of which is formed by the inner tube casing (7) of the first tube (6).

4. Method according to claim 3, **characterized in that** the first tube (6) is set into radial vibrations (8) which have temporally successively different frequencies in a predetermined frequency range.

5. Method according to claim 3 or 4, **characterized in that** impedance measurement data (Z) are recorded from the first tube (6).

6. Method according to claim 3, 4 or 5, **characterized in that** an interference pattern (13) is determined from the measurement data (Z), via which the damping coefficient (D_{K}) is calculated.

7. Method according to claim 6, **characterized in that** the damping coefficient (D_{K}) is calculated via at least one maxima (11) and/or minima (30) of the interference pattern (13).

8. Method according to claim 1 or 2, **characterized in that** the liquid (2) is introduced into at least one hollow circular-cylindrical measuring chamber (16, 23), one lateral surface (5, 17) of which is formed by the first tube (6) which can be excited to radial vibrations (8).

9. Method according to claim 8, **characterized in that** the first tube (6) is set into radial vibrations (8) which follow a burst signal (27).

10. Method according to claim 9, **characterized in that** the other lateral surface (21) of the hollow circular-cylindrical measuring chamber (16) forms a second tube (18), from which measurement data (V_{OUT1}) for vibration excitation of the liquid (2) by the radial vibrations (8) of the first tube (6) are acquired.

11. Method according to claim 10, **characterized in that** a damping coefficient (D_{K}) describing the damping of the acoustic wave by the liquid (2) is calculated from a comparison, more particularly in the time domain, of the radial vibrations (8) of the first tube and the measurement data (V_{OUT1}, V_{OUT2}).

12. Method according to claim 10 or 11, **characterized in that** the liquid (2) is introduced into two hollow circular-cylindrical measuring chambers (16, 23), wherein a hollow circular-cylindrical measuring chamber (16) of the first tube and the second tube (6, 18) which is outer thereto and a further hollow circular-cylindrical chamber (23) of the first tube and a third tube (6, 24) which is inner thereto are introduced, wherein measurement data (V_{OUT1}, V_{OUT2}) for vibration excitation of the liquid (2) by the radial vibrations (2) of the first tube (6) are detected by the second and third tubes (18, 24).

13. Method according to claim 12, **characterized in that** the measurement data (V_{OUT1}, V_{OUT2}) of the second and third tubes (18, 24) are subjected to ratio formation.

14. Apparatus for determining the longitudinal viscosity of a liquid (2) having at least one measuring chamber (3, 16, 23) receiving the liquid (2) and having at least one d33 piezoelectric tube (6, 18, 24), wherein the d33 piezoelectric tube (6) forms the entire lateral surface (5) of the measuring chamber (3) or the d33 piezoelectric tubes (6, 18, 24) form in each case all lateral surfaces (5, 17, 21, 26) of the measuring chambers (16, 23).

15. Apparatus according to claim 14, **characterized in that** a measuring chamber (3) is of circular-cylindrical design.

16. Apparatus according to claim 14, **characterized in that** a measuring chamber (16, 23) is of hollow circular-cylindrical design.

17. Apparatus according to claim 16, **characterized in that** the first piezoelectric tube (6), which can be excited to radial vibrations (8), is provided between two hollow circular-cylindrical measuring chambers (16, 23).

## Revendications

1. Procédé pour déterminer la viscosité longitudinale d'un liquide (2) prévu dans au moins une chambre de mesure (3, 16, 23) avec au moins un tube (6, 18, 24), selon lequel
le premier tube (6), qui est en contact avec le liquide (2), est mis en oscillations radiales (8) en utilisant un effet piézoélectrique, l'effet piézoélectrique du premier tube (6) constitué d'un matériau piézoélectrique étant utilisé pour générer les oscillations radiales (8) du premier tube (6),
des données de mesure (Z, V_{OUT1}, V_{OUT2}) relatives à l'excitation en oscillation du liquide (2) par les oscillations radiales (8) du premier tube (2) sont acquises et,
à partir des données de mesure (Z, V_{OUT1}, V_{OUT2}), on calcule un coefficient d'amortissement (D_{K}) décrivant l'amortissement dû au liquide (2), au moyen duquel on détermine la viscosité longitudinale du liquide (2),
le liquide (2) étant excité en oscillation dans au moins une chambre de mesure (3, 16, 23) ayant une surface extérieure (5) ou des surfaces extérieures (5, 17, 21, 26) formées exclusivement de droites parallèles.

2. Procédé selon la revendication 1, **caractérisé en ce qu'**au moins l'une des oscillations radiales (8) présente la fréquence de résonance du tube (6) ou une fréquence voisine de la fréquence de résonance du tube (6).

3. Procédé selon la revendication 1 ou 2, **caractérisé en ce que** le liquide (2) est introduit dans une chambre de mesure cylindrique circulaire (3) dont la surface extérieure (5) est formée par l'enveloppe de tube intérieure (7) du premier tube (6).

4. Procédé selon la revendication 3, **caractérisé en ce que** le premier tube (6) est mis en oscillations radiales (8) qui présentent des fréquences successivement différentes dans le temps dans une plage de fréquences prédéfinie.

5. Procédé selon la revendication 3 ou 4, **caractérisé en ce que** des données de mesure d'impédance (Z) sont acquises à partir du premier tube (6).

6. Procédé selon la revendication 3, 4 ou 5, **caractérisé en ce qu'**à partir des données de mesure (Z), on détermine un motif d'interférence (13) au moyen duquel on calcule le coefficient d'amortissement (D_{K}).

7. Procédé selon la revendication 6, **caractérisé en ce que** le coefficient d'amortissement (D_{K}) est calculé par l'intermédiaire d'au moins un maximum (11) et/ou un minimum (30) du motif d'interférence (13).

8. Procédé selon la revendication 1 ou 2, **caractérisé en ce que** le liquide (2) est introduit dans au moins une chambre de mesure cylindrique circulaire creuse (16, 23) dont une surface extérieure (5, 17) est formée par le premier tube (6) pouvant être excité en oscillations radiales (8).

9. Procédé selon la revendication 8, **caractérisé en ce que** le premier tube (6) est mis en oscillations radiales (8) qui suivent un signal en rafale (27).

10. Procédé selon la revendication 9, **caractérisé en ce que** l'autre surface extérieure (21) de la chambre de mesure cylindrique circulaire creuse (16) forme un deuxième tube (18) à partir duquel des données de mesure (V_{OUT1}) relatives à l'excitation en oscillation du liquide (2) par les oscillations radiales (8) du premier tube (6) sont acquises.

11. Procédé selon la revendication 10, **caractérisé en ce qu'**un coefficient d'amortissement (D_{K}) décrivant l'amortissement de l'onde acoustique par le liquide (2) est calculé à partir d'une comparaison, effectuée en particulier dans le domaine temporel, des oscillations radiales (8) du premier tube et des données de mesure (V_{OUT1}, V_{OUT2}).

12. Procédé selon la revendication 10 ou 11, **caractérisé en ce que** le liquide (2) est introduit dans deux chambres de mesure cylindriques circulaires creuses (16, 23), une chambre de mesure cylindrique circulaire creuse (16) étant formée par le premier tube et le deuxième tube (6, 18) extérieur à celui-ci et une autre chambre cylindrique circulaire creuse (23) par le premier tube et un troisième tube (6, 24) intérieur à celui-ci, des données de mesure (V_{OUT1}, V_{OUT2}) relatives à l'excitation en oscillation du liquide (2) par les oscillations radiales (2) du premier tube (6) étant acquises à partir des deuxième et troisième tubes (18, 24).

13. Procédé selon la revendication 12, **caractérisé en ce que** les données de mesure (V_{OUT1}, V_{OUT2}) des deuxième et troisième tubes (18, 24) sont soumises à une formation de rapport.

14. Dispositif pour déterminer la viscosité longitudinale d'un liquide (2) avec au moins une chambre de mesure (3, 16, 23) recevant le liquide (2) et avec au moins un tube piézoélectrique d33 (6, 18, 24), le tube piézoélectrique d33 (6) formant la surface extérieure totale (5) de la chambre de mesure (3) ou les tubes piézoélectriques d33 (6, 18, 24) formant respectivement toutes les surfaces extérieures (5, 17, 21, 26) des chambres de mesure (16, 23).

15. Dispositif selon la revendication 14, **caractérisé en ce qu'**une chambre de mesure (3) est de forme cylindrique circulaire.

16. Dispositif selon la revendication 14, **caractérisé en ce qu'**une chambre de mesure (16, 23) est de forme cylindrique circulaire creuse.

17. Dispositif selon la revendication 16, **caractérisé en ce que** le premier tube piézoélectrique (6) pouvant être excité en oscillations radiales (8) est prévu entre deux chambres de mesure cylindriques circulaires creuses (16, 23).
